# EUROPÄISCHE PATENTSCHRIFT

(11) **EP 1 168 206 B1**
(45) Veröffentlichungstag und Bekanntmachung des Hinweises auf die Patenterteilung: **01.12.2004**
(21) Anmeldenummer: 01114916.8
(22) Anmeldetag: 20.06.2001
(51) Int. Cl.: G06F 17/50, G06F 11/34

(54) **Verfahren zum Analysieren der Verlustleistung einer elektrischen Schaltung**
Process to analyse the power dissipation of an electric circuit
Procédé d'analyse de la puissance dissipée d'un circuit électrique

(30) Priorität: 20.06.2000 DE 10030349
(43) Veröffentlichungstag der Anmeldung: 02.01.2002
(73) Patentinhaber: Chipvision Design Systems AG, 26121 Oldenburg (DE)
(72) Erfinder: Kruse, Lars, 26131 Oldenburg (DE)
(74) Vertreter: Eisenführ, Speiser & Partner

(56) Entgegenhaltungen:
- US-A- 5 960 198
- ARNOLD M ET AL: "A framework for reducing the cost of instrumented code" SIGPLAN NOTICES, MAY 2001, ACM, USA, Bd. 36, Nr. 5, Seiten 168-179, XP002252311 ISSN: 0362-1340
- KUMAR N ET AL: "PROFILE-DRIVEN BEHAVIORAL SYNTHESIS OF LOW-POWER VLSI SYSTEMS" IEEE DESIGN & TEST OF COMPUTERS, IEEE COMPUTERS SOCIETY. LOS ALAMITOS, US, Bd. 12, Nr. 3, 21. September 1995 (1995-09-21), Seiten 70-84, XP000541812 ISSN: 0740-7475
- KATKOORI S ET AL: "Architectural power estimation based on behavior level profiling" VLSI DESIGN, 1998, GORDON & BREACH, NETHERLANDS, Bd. 7, Nr. 3, Seiten 1-25, XP002252312 ISSN: 1065-514X
- KRUSE LARS ET AL: "Lower and upper bounds on the switching activity in scheduled data flow graphs" PROCEEDINGS OF THE 1999 INTERNATIONAL SYMPOSIUM ON LOW POWER ELECTRONICS AND DESIGN (ISLPED'99);SAN DIEGO, CA, USA AUG 16-AUG 17 1999, 1999, Seiten 115-120, XP002252313 Proc Int Symp Low Power Des;Proceedings of the International Symposium on Low Power Design 1999 ACM, New York, NY, USA

## Beschreibung

Die Erfindung betrifft ein Verfahren zum Analysieren der Verlustleistung bzw. einer Energieaufnahme einer elektrischen Schaltung bzw. eines elektrischen Bauelementes, vorzugsweise einer integrierten Schaltung, wobei ein Algorithmus, der das Design der Schaltung oder des Bauelementes beschreibt, verwendet wird und wobei in den Algorithmus wenigstens eine Protokollfunktion eingefügt wird, die einen berechneten Verlustleistungswert bzw. einen berechneten Energieaufnahmewert oder einen für die Berechnung der Verlustleistung bzw. der Energieaufnahme heranziehbaren Wert einer definierten Weiterverwendung zuführt.

Durch elektrische Schaltungen bzw. durch ein oder mehrere elektrische Bauelemente fließt elektrischer Strom. Diesem wird z. B. bei einem Fließen über Widerstände der Schaltung Leistung entzogen. Diese Verlustleistung wird größtenteils in Wärme umgesetzt.

Bei der Konfiguration einer elektrischen Schaltung bzw. eines elektrischen Bauelementes ist es erforderlich, die im späteren Betrieb anfallenden Verlustleistungen zu analysieren, d. h. zu bestimmen bzw. zu messen. Dies ist insbesondere deshalb erforderlich, um bereits bei der Entwicklung einer elektrischen Schaltung zu berücksichtigen, daß im Betrieb dieser Schaltung später keine zu hohe Wärme entsteht. Eine zu hohe Wärme kann nämlich zu einer Beschädigung von Bauelementen bzw. von integrierten Schaltungen führen, auch ein Totalausfall ist möglich.

Die Ermittlung der Verlustleistung ist somit beispielsweise deshalb durchzuführen, um die erforderliche Kühlung von elektrischen Bauelementen zu bestimmen. Bekannte Beispiele sind dafür Prozessoren in Personalcomputern, die mittels Kühlkörpern und Ventilatoren gekühlt werden.

Neben der Bestimmung der Verlustleistung einer elektrischen Schaltung bzw. eines elektrischen Bauelementes ist häufig auch deren Energieaufnahme zu ermitteln. Die Ermittlung der Energieaufnahme eines elektrischen Bauelementes ist beispielsweise dann erforderlich, wenn die Energie durch eine Batterie oder durch einen Akkumulator zur Verfügung gestellt wird. Aus der bestimmten Energieaufnahme ist dann die Zeit ermittelbar, die bis zu einer definierten Entladung der

Batterie bzw. des Akkumulators abläuft. Wenn diese Zeit vorher bestimmt wurde, kann sichergestellt werden, daß eine verbrauchte Batterie bzw. ein verbrauchter Akkumulator rechtzeitig durch eine geladene Energiequelle ersetzt wird.

Es ist auch schon vorgeschlagen worden, mit Hilfe eines Algorithmus, der das Design, d. h. den Aufbau, einer Schaltung bzw. eines Bauelementes beschreibt, die Verlustleistung oder die Energieaufnahme zu analysieren. Dadurch ist ermöglicht, daß zum Beispiel die Verlustleistung einer elektrischen Schaltung bereits im Entwurfsstadium dieser Schaltung in Form eines Algorithmus analysiert werden kann und zu hohe Verlustleistungswerte noch im Entwurfsstadium korrigiert werden können. Die Entwicklung einer Schaltung wird dadurch wesentlich optimiert, weil das Anfertigen von Hardwareentwürfen für die Verlustleistungsanalyse entfällt.

Um die Verlustleistung einer elektrischen Schaltung bzw. auch mehrere Verlustleistungen voneinander verschiedener Bauelemente innerhalb ein und derselben elektrischen Schaltung analysieren zu können, wird in den Algorithmus wenigstens eine Protokollfunktion eingefügt. Die Protokollfunktion dient dazu, einen bei Ablauf des Algorithmus am Ort ihres Einfügens ermittelten Verlustleistungswert einer definierten Weiterverwendung zuzuführen. Der Verlustleistungswert wird bevorzugt einer Auswertung zugeführt, die z.B. in Echtzeit erfolgt. Neben einem ermittelten Verlustleistungswert kann durch die Protokollfunktion auch ein Wert einer definierten Weiterverwendung zugeführt werden, der noch nicht eine ermittelte Verlustleistung oder auch eine ermittelte

Energieaufnahme repräsentiert. Es kann sich um einen Wert handeln, der für die Bestimmung der Verlustleistung oder für die Bestimmung der Energieaufnahme verwendbar ist. Dazu wird dieser Wert beispielsweise geeigneten Modellen, wie mathematischen Modellen, zugeführt, mit deren Hilfe die Verlustleistung bzw. die Energieaufnahme rechnerisch bestimmbar ist.

Durch die Verwendung des Algorithmus der Schaltung zum Beispiel für die Verlustleistungsanalyse wird ein simulationsbasierender Ansatz verfolgt. Die Verwendung des Algorithmus erfolgt in der Weise, daß während des Verfahrens der Algorithmus einmal durchlaufen wird oder mehrere Durchläufe des Algorithmus vorgenommen werden. Dieses ein- oder mehrmalige Durchlaufen des Algorithmus stellt die Simulation dar, während dieser können ermittelte Verlustleistungswerte, wie Zwischenwerte und Endergebnisse, mit der in den Algorithmus eingefügten wenigstens einen Protokollfunktion protokolliert werden. Dieses Protokollieren wird vorzugsweise dadurch vorgenommen, daß mit der Protokollfunktion ein Wert an einem definierten Ort gespeichert wird. An diesem definierten Ort steht dieser Wert dann beispielsweise einer Weiterverarbeitung durch geeignete Auswertungssysteme zur Verfügung.

Ein für die Verlustleistungsanalyse verwendeter Algorithmus ist zum Erreichen eines statistisch ausgewogenen Ergebnisses mehrfach zu durchlaufen. Beispielsweise werden für eine Verlustanalyse 100.000 Meßwerte verwendet, so daß der Algorithmus 100.000 mal zu durchlaufen ist. Durch ein dadurch bedingt häufiges Ausführen einer in den Algorithmus eingefügten Protokollfunktion wird eine erhebliche Zeitdauer benötigt.

Der Erfindung liegt die Aufgabe zugrunde, ein Verfahren der eingangs genannten Gattung aufzuzeigen, mit dem eine beschleunigte Analysierung der Verlustleistung bzw. der Energieaufnahme gewährleistet ist, ohne die Qualität der Analysierung zu vermindern.

Diese Aufgabe ist erfindungsgemäß dadurch gelöst, daß von dem ursprünglichen Algorithmus vor Einfügen der wenigstens einen Protokollfunktion zumindestens eine Kopie hergestellt wird, daß in diese Kopie die wenigstens eine Protokollfunktion eingefügt wird und daß regelmäßig der ursprüngliche Algorithmus und stichprobenartig die Kopie des Algorithmus mit der wenigstens einen Protokollfunktion durchlaufen wird.

Bei dem erfindungsgemäßen Verfahren wird somit der ursprüngliche Algorithmus, der das Design der elektrischen Schaltung beschreibt, nicht verändert. Dadurch steht dieser Algorithmus für die Simulation weiterhin in ursprünglicher Form zur Verfügung.

Von dem Algorithmus wird nach der Erfindung eine Kopie angefertigt, in die dann die wenigstens eine Protokollfunktion eingefügt wird. Um einen Verlustleistungswert oder einen Energieaufnahmewert zu ermitteln und für eine Auswertung zur Verfügung zu stellen, ist daher nicht der ursprüngliche Algorithmus, sondern dessen Kopie zu durchlaufen.

Das Anfertigen der Kopie des Algorithmus hat den Vorteil, daß fallweise der ursprüngliche Algorithmus ohne Protokollfunktion und fallweise der kopierte Algorithmus mit Protokollfunktion durchlaufen werden kann. Es hat sich gezeigt, daß eine ausreichend genaue Messung der Verlustleistung oder der Energieaufnahme auch dann durchführbar ist, wenn ein mit wenigstens einer Protokollfunktion ergänzter Algorithmus nicht fortlaufend durchlaufen wird. Es reicht aus, stichprobenartig den kopierten Algorithmus mit der wenigstens einen Protokollfunktion zu durchlaufen und ansonsten den Algorithmus in seiner ursprünglichen Form zu durchlaufen. Dadurch wird die Zahl der durch die Protokollfunktion übertragenen Werte reduziert, woraus sich der wesentliche Vorteil einer Beschleunigung des Verfahrens ergibt.

Durch diese Beschleunigung des erfindungsgemäßen Verfahrens wird die Genauigkeit der Ermittlung der Verlustleistung nicht verringert. Auch bei dem lediglich fallweisen Durchlaufen der Kopie des Algorithmus wird eine ausreichende Zahl von Werten ermittelt, die nach ihrer Weiterverarbeitung eine ausreichend exakte Bestimmung der Verlustleistung oder der Energieaufnahme zum Beispiel einer Schaltung ermöglichen.

Erfindungsgemäß kann auch vorgesehen sein, daß von einem Teilabschnitt des Algorithmus eine Kopie angefertigt wird, in die dann wenigstens eine Protokollfunktion eingefügt wird. Das erfindungsgemäße Verfahren ist somit auch in Teilabschnitten eines Algorithmus bzw. in Unteralgorithmen anwendbar. Auch hier ergibt sich der Vorteil einer Zeitersparnis, da der Algorithmusabschnitt mit der eingefügten Protokollfunktion nicht bei jedem Durchlauf des Algorithmus zu durchlaufen ist, sondern nach statistischen Gesetzmäßigkeiten für den Erhalt eines repräsentativen Ergebnisses fallweise zu durchlaufen ist.

Die fallweise Entscheidung, ob der ursprüngliche Algorithmus oder die Kopie des Algorithmus mit der Protokollfunktion durchlaufen wird, wird anhand statistischer Gesetzmäßigkeiten getroffen. Diese beinhalten, daß in einer großen Datenmenge nicht sämtliche Daten analysiert werden müssen, sondern daß eine Teilmenge dieser Daten für die Ermittlung eines auf allen Daten basierenden Wertes, wie beispielsweise der Verlustleistung oder der Energieaufnahme, verwendet werden kann. Bei dem erfindungsgemäßen Verfahren werden dabei vorzugsweise Teilmengen einer großen Datenzahl verwendet, wobei in jeder Teilmenge aufeinanderfolgende Daten, insbesondere in von aufeinanderfolgenden Durchläufen des Algorithmus gewonnenen Daten verwendet werden. Diese Datenfolgen, auch Samples genannt, können beispielsweise zehn Datenwörter enthalten. In Abhängigkeit von der Größe des Algorithmus wird eine ausreichende Zahl von Daten durch die Protokollfunktionen herausgegriffen und protokolliert. Beispielsweise werden 0,01 % bis 0,1 % der am Ort des Einfügens der Protokollfunktion vorliegenden Daten durch die Protokollfunktion protokolliert. Das bedeutet, daß jeder zehntausendste bis tausendste Datenwert protokolliert wird. Daraus resultiert bei ausreichend genauer Bestimmung der Verlustleistung bzw. der Energieaufnahme eine erhebliche Beschleunigung des Verfahrens, denn nach einem Durchlauf des kopierten Algorithmus mit der wenigstens einen Protokollfunktion können etwa zehntausend Durchläufe des ursprünglichen Algorithmus ohne Protokollfunktion durchgeführt werden.

Vorzugsweise wird durch die wenigstens eine Protokollfunktion ein berechneter Verlustleistungswert oder ein für die Berechnung der Verlustleistung geeigneter Wert in eine Datei geschrieben. Diese steht dann für weitere Auswertungen zur Verfügung.

Als algorithmische Beschreibung des Designs der Schaltung wird nach einer Weiterbildung der Erfindung eine Software verwendet. Durch eine Software kann auch eine komplizierte integrierte Schaltung beschrieben werden. Die Software gibt die einzelnen Bauelemente der Schaltung wieder, so daß durch das Einfügen von einer oder mehrerer Protokollfunktionen an geeigneter Stelle innerhalb des Algorithmus mehrere Verlustleistungswerte oder Energieaufnahmewerte, wie mehrere Zwischenwerte, ermittelbar sind und bestimmten Bauelementen der Schaltung zuordbar sind. Die Software hat dabei vorzugsweise die Datenform einer Textdatei.

Die Erfindung wird nachfolgend an zwei Ausführungsbeispielen erläutert:
1. Gegeben sei folgender Algorithmus, der Teil einer Designbeschreibung einer elektrischen Schaltung ist: 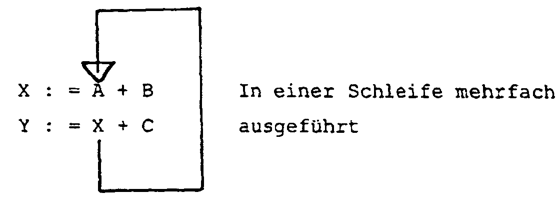 Sowohl die Werte von X aus auch die Werte von Y sollen protokolliert werden. Hierzu werden zwei Protokollfunktionen "schreibe_in_Datei ()" hinzugefügt: 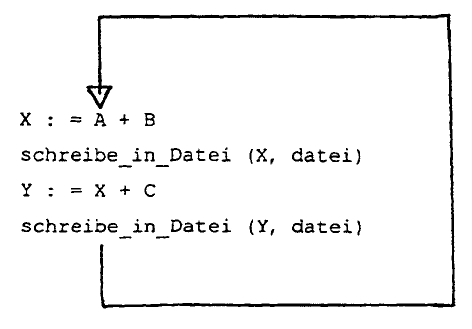 Die beiden Protokollfunktionen "schreibe_in_Datei (...)" schreiben die Werte von X und von Y in die angegebene Datei. Diese Werte können beispielsweise zur Ermittlung einer Verlustleistung verwendet werden.
2. Nach der bevorzugten Ausführungsform des Verfahrens wird von dem Algorithmus eine Kopie hergestellt, in welche die Protokollfunktionen eingefügt werden. Der ursprüngliche Algorithmus bleibt unverändert. Dadurch ergibt sich folgende Ausgestaltung: 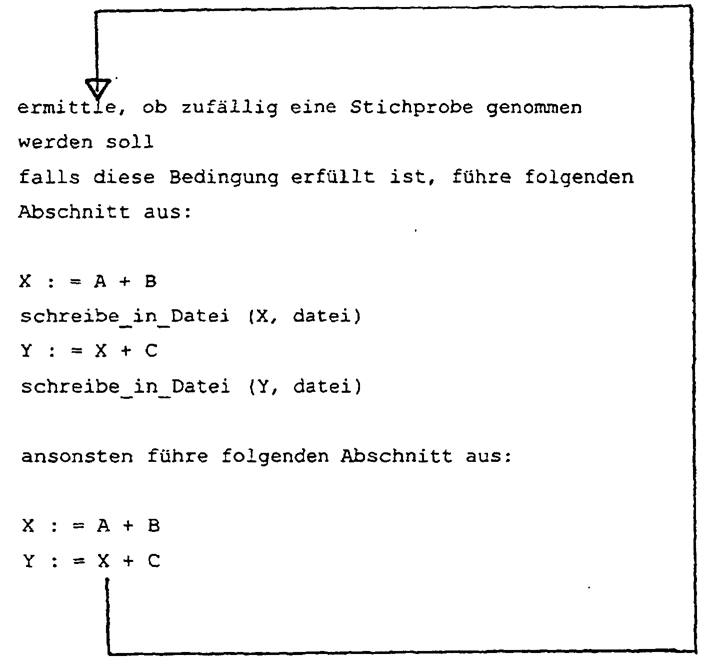 Die Entscheidung, ob die Kopie des Algorithmus oder der ursprüngliche Algorithmus durchlaufen wird, erfolgt anhand statistischer Gesetzmäßigkeiten. Ganz regelmäßig wird der ursprüngliche Algorithmus durchlaufen. Stichprobenartig wird die Kopie mit den Protokollfunktionen durchlaufen, so daß Werte für X und Y etwa bei jedem zehntausendsten Durchlauf ermittelt werden. Dadurch ergibt sich bei ausreichender Genauigkeit der Verlustleistungsanalyse eine kurze Verfahrensdauer.

## Patentansprüche

1. Verfahren zum Analysieren der Verlustleistung bzw. der Energieaufnahme einer elektrischen Schaltung bzw. eines elektrischen Bauelementes, vorzugsweise einer integrierten Schaltung, wobei ein Algorithmus, der das Design der Schaltung oder des Bauelementes beschreibt, verwendet wird und wobei in den Algorithmus wenigstens eine Protokollfunktion eingefügt wird, die einen berechneten Verlustleistungswert bzw. einen berechneten Energieaufnahmewert oder einen für die Berechnung der Verlustleistung bzw. der Energieaufnahme heranziehbaren Wert einer definierten Weiterverwendung zuführt,
**dadurch gekennzeichnet,**
**daß** von dem ursprünglichen Algorithmus vor Einfügen der wenigstens einen Protokollfunktion zumindestens eine Kopie hergestellt wird, daß in diese Kopie die wenigstens eine Protokollfunktion eingefügt wird und daß regelmäßig der ursprüngliche Algorithmus und stichprobenartig die Kopie des Algorithmus mit der wenigstens einen Protokollfunktion durchlaufen wird.

2. Verfahren nach Anspruch 1, **dadurch gekennzeichnet, daß** die fallweise Entscheidung, ob der ursprüngliche Algorithmus oder die Kopie des Algorithmus mit der Protokollfunktion verwendet wird, anhand statistischer Gesetzmäßigkeiten getroffen wird.

3. Verfahren nach Anspruch 1 oder 2, **dadurch gekennzeichnet, daß** nach einem Verwenden der Kopie des Algorithmus mit der eingefügten Protokollfunktion etwa 10.000 mal der ursprüngliche Algorithmus verwendet wird.

4. Verfahren nach einem der Ansprüche 1 bis 3, **dadurch gekennzeichnet, daß** die Protokollfunktion den Wert an einem definierten Ort speichert.

5. Verfahren nach Anspruch 4, **dadurch gekennzeichnet, daß** durch die Protokollfunktion der Wert in eine Datei geschrieben wird.

6. Verfahren nach einem der vorhergehenden Ansprüche, **dadurch gekennzeichnet, daß** als algorithmische Beschreibung des Designs der Schaltung eine Software verwendet wird.

7. Verfahren nach Anspruch 6, **dadurch gekennzeichnet, daß** die Software die Datenform einer Textdatei hat.

## Claims

1. Method for analysing the power loss or the energy consumption of an electrical circuit or of an electrical component, preferably of an integrated circuit, an algorithm that describes the design of the circuit or of the component being used, and there being inserted into the algorithm at least one log function that leads a calculated power loss value or a calculated energy consumption value or a value that can be used for the calculation of the power loss or the energy consumption to a defined further use,
**characterized**
**in that** at least one copy is made of the original algorithm before the at least one log function is inserted, in that the at least one log function is inserted into this copy, and in that the original algorithm is run through regularly and the copy of the algorithm with the at least one. log function is run through in the manner of random sampling.

2. Method according to Claim 1, **characterized in that** the case-by-case decision as to whether the original algorithm or the copy of the algorithm with the log function is used is taken on the basis of statistical laws.

3. Method according to Claim 1 or 2, **characterized in that** after a use of the copy of the algorithm with the inserted log function, the original algorithm is used approximately 10 000 times.

4. Method according to one of Claims 1 to 3, **characterized in that** the log function stores the value at a defined location.

5. Method according to Claim 4, **characterized in that** the value is written to a file by means of the log function.

6. Method according to one of the preceding claims, **characterized in that** a software is used as the algorithmic description of the design of the circuit.

7. Method according to Claim 6, **characterized in that** the software has the data form of a text file.

## Revendications

1. Procédé d'analyse de la puissance dissipée et de l'absorption d'énergie d'un circuit électrique et d'un élément de construction électrique, de préférence d'un circuit intégré, dans lequel est utilisé un algorithme qui décrit le design du circuit ou de l'élément de construction et dans lequel dans l'algorithme est introduite au moins une fonction de protocole qui délivre une valeur de puissance dissipée calculée et une valeur d'absorption d'énergie calculée ou une valeur pouvant être utilisée pour le calcul de la puissance dissipée et de l'absorption d'énergie à une utilisation ultérieure définie, **caractérisé en ce qu'**une copie au moins est créée par l'algorithme original avant l'introduction de ladite au moins une fonction de protocole, **en ce que** dans cette copie est introduite au moins une fonction de protocole et **en ce que** régulièrement l'algorithme original, et par échantillon la copie de l'algorithme, est parcouru avec au moins une des fonctions de protocole.

2. Procédé selon la revendication 1, **caractérisé en ce que** le fait de décider au hasard si c'est l'algorithme original ou la copie de l'algorithme qui est utilisé(e) avec la fonction de protocole est pris à l'aide de lois statistiques.

3. Procédé selon la revendication 1 ou 2, **caractérisé en ce qu'**après une utilisation de la copie de l'algorithme avec la fonction de protocole introduite, l'algorithme original est utilisé environ 10.000 fois.

4. Procédé selon l'une des revendications 1 à 3, **caractérisé en ce que** la fonction de protocole enregistre la valeur à un endroit défini.

5. Procédé selon la revendication 4, **caractérisé en ce que** la valeur est écrite dans un fichier de données par la fonction de protocole.

6. Procédé selon l'une quelconque des revendications précédentes, **caractérisé en ce que** l'on utilise un logiciel comme description algorithmique du design du circuit.

7. Procédé selon la revendication 6, **caractérisé en ce que** le logiciel a la forme d'un fichier de texte.
